(19) Europäisches Patentamt / European Patent Office / Office européen des brevets

(11) **EP 4 372 259 A1**

(12) **EUROPÄISCHE PATENTANMELDUNG**

(43) Veröffentlichungstag:
**22.05.2024   Patentblatt 2024/21**

(21) Anmeldenummer: **22207409.8**

(22) Anmeldetag: **15.11.2022**

(51) Internationale Patentklassifikation (IPC):
**F16K 31/06** (2006.01)   **A47L 9/20** (2006.01)
**B01D 46/42** (2006.01)

(52) Gemeinsame Patentklassifikation (CPC):
**F16K 31/0675; A47L 9/20; B01D 46/4272**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Hanslmeier, Xaver**
  **87665 Mauerstettten (DE)**
• **Podhorny, Roman**
  **86807 Buchloe (DE)**
• **Andriushchenko, Ekaterina**
  **86899 Landsberg am Lech (DE)**

(74) Vertreter: **Hilti Aktiengesellschaft**
**Corporate Intellectual Property**
**Feldkircherstrasse 100**
**Postfach 333**
**9494 Schaan (LI)**

(54) **VENTIL, VERWENDUNG DES VENTILS UND SAUGGERÄT MIT EINEM SOLCHEN VENTIL**

(57)   Die vorliegende Erfindung betrifft ein Ventil zur Freigabe oder zum Verschließen von mindestens einer Öffnung, wobei das Ventil ein Ventilelement aufweist, das in einer geschlossenen Stellung die mindestens eine Öffnung verschließt und in einer geöffneten Stellung die mindestens eine Öffnung freigibt, wobei das Ventilelement von einem Magneten von der geschlossenen Stellung in die geöffnete Stellung bringbar ist. Das Ventil weist einen ersten Ankerbereich und einen zweiten Ankerbereich auf, wobei die Ankerbereiche zeitlich versetzt zueinander anhebbar sind und das Ventilelement durch das zeitlich versetzte Anheben der Ankerbereiche von der geschlossenen in die geöffnete Stellung bringbar ist. In weiterer Aspekt betrifft die Erfindung eine Verwendung des vorgeschlagenen Ventils zur Durchführung einer Filterabreinigung in einem Sauggerät, sowie ein Sauggerät mit einem Ventil. Mit der Erfindung kann ein besonders energiesparendes Öffnen und Schließen eines Ventils ermöglicht werden, so dass beispielsweise bei Verwendung des Ventils in einem batteriebetriebenen Sauggerät trotz regelmäßig durchgeführter Filterabreinigung eine längere Batterielaufzeit erreicht werden kann.

Fig. 1

## Beschreibung

Die vorliegende Erfindung betrifft ein Ventil zur Freigabe oder zum Verschließen von mindestens einer Öffnung, wobei das Ventil ein Ventilelement aufweist, das in einer geschlossenen Stellung die mindestens eine Öffnung verschließt und in einer geöffneten Stellung die mindestens eine Öffnung freigibt, wobei das Ventilelement von einem Magneten von der geschlossenen Stellung in die geöffnete Stellung bringbar ist. Das Ventil weist einen ersten Ankerbereich und einen zweiten Ankerbereich auf, wobei die Ankerbereiche zeitlich versetzt zueinander anhebbar sind und das Ventilelement durch das zeitlich versetzte Anheben der Ankerbereiche von der geschlossenen in die geöffnete Stellung bringbar ist. In weiterer Aspekt betrifft die Erfindung eine Verwendung des vorgeschlagenen Ventils zur Durchführung einer Filterabreinigung in einem Sauggerät, sowie ein Sauggerät mit einem vorgeschlagenen Ventil. Mit der Erfindung kann ein besonders energiesparendes Öffnen und Schließen eines Ventils ermöglicht werden, so dass beispielsweise bei Verwendung des Ventils in einem batteriebetriebenen Sauggerät trotz regelmäßig durchgeführter Filterabreinigung eine längere Batterielaufzeit erreicht werden kann.

## Hintergrund der Erfindung:

Auf dem Markt gibt es Bausauger mit verschiedenen Methoden, um den Filter zu reinigen, wobei ein Rückspülen oder ein mechanisches Rütteln des Filters am weitesten verbreitet ist.

Ein wichtiger Bestandteil der Abreinigungstechnologie ist die Ventiltechnik, die von einer hohen und kraftvollen Dynamik abhängt. Um diese Dynamik zu gewährleisten, werden Haft- bzw. Haltemagnete als kostengünstige und robuste Aktuatorik eingesetzt, die mit so genannten Ankern in Scheibenform agieren. Der Nachteil dieser Haltemagneten liegt in der wegabhängigen Kraftkurve. Das bedeutet, dass mit zunehmendem Abstand sich die Magnetkraft nahezu exponentiell verringert.

Ein größerer Magnet mit größerer Reichweite ist kostenintensiv und erreicht nicht immer die notwendige Dynamik.

Ein großer Hub des Ventils ist dagegen ein wichtiger Parameter für die Menge an Rückspülluft pro Zeit und somit für die Güte der Filterabreinigung in einem Sauggerät, wie einem Bausauger.

Die Aufgabe, die der vorliegenden Erfindung zugrunde liegt, besteht darin, die vorstehend beschriebenen Mängel, Nachteile und Zielkonflikte des Standes der Technik zu überwinden und ein Ventil bereitzustellen, das einerseits energiesparend geöffnet und geschlossen werden kann und dass andererseits mit einer solchen Dynamik geöffnet werden kann, dass eine wirksame und starke Abreinigung eines Filters in einem Sauggerät ermöglicht werden kann. Der energiesparende Betrieb des bereitzustellenden Ventils ist vor allem deswegen wünschenswert, um beispielsweise in einem batteriebetriebenen Sauggerät die Batterie und ihre Laufzeit zu schonen. Aber auch für Netzsauger würde ein energieeffizient arbeitendes Ventil einen ökologischen und ökonomischen Vorteil insofern bieten, dass ein solches Ventil nicht dauerhaft betrieben werden müsste und dass insbesondere kleinere und kostengünstige Magnete eingesetzt werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

## Beschreibung der Erfindung:

Erfindungsgemäß ist ein Ventil zur Freigabe oder zum Verschließen von mindestens einer Öffnung vorgesehen, wobei das Ventil ein Ventilelement aufweist, der in einer geschlossenen Stellung die mindestens eine Öffnung verschließt und in einer geöffneten Stellung die mindestens eine Öffnung freigibt, wobei das Ventilelement von einem Magneten von der geschlossenen Stellung in die geöffnete Stellung bringbar ist. Das Ventil weist einen ersten Ankerbereich und einen zweiten Ankerbereich auf, wobei die Ankerbereiche zeitlich versetzt zueinander anhebbar sind und das Ventilelement durch das zeitlich versetzte Anheben der Ankerbereiche von der geschlossenen in die geöffnete Stellung bringbar ist. Es hat sich gezeigt, dass durch ein versetztes Anheben der Ankerbereiche ein besonders energiesparendes Öffnen des Ventils bzw. Anheben des Ventilelements erfolgen kann. Wenn das Ventil beispielsweise in einem Sauggerät, wie einem Staubsauger eingesetzt wird, kann eine Abreinigung der Filter und ein energieeffizienter Betrieb des Sauggeräts mit der Erfindung besonders gut unterstützt werden. Dieser wesentliche Vorteil der Erfindung kann insbesondere dadurch erreicht werden, dass die Ankerbereiche vorteilhafterweise versetzt zueinander angehoben werden.

Dass die Ankerbereiche des vorgeschlagenen Ventils zeitlich versetzt zueinander bewegt werden können, um das Ventilelement von der geschlossenen in die geöffnete Stellung zu bringen, kann insbesondere dadurch erreicht werden, dass sich die Ankerbereiche - zumindest in einem gewissen Rahmen - unabhängig voneinander bewegen können. Es ist im Sinne der Erfindung bevorzugt, dass die Ankerbereiche durch ihre strukturelle Ausgestaltung dazu eingerichtet sind, dass der zweite Ankerbereich angehoben wird, wenn sich der erste Ankerbereich um eine Wegstrecke delta s1 nach oben bewegt hat. Die Ankerbereiche können als strukturelle Ausgestaltung vorstehenden Elemente oder Nasen aufweisen, die so ineinander greifen oder so miteinander zusammen wirken, dass der zweite Ankerbereich einer Hubbewegung des ersten Ankerbereichs nachfolgt, wenn sich der erste Ankerbereich um eine Wegstrecke delta s1 nach oben bewegt hat.

Der Magnet innerhalb des vorgeschlagenen Ventils kann vorzugsweise als Elektromagnet ausgebildet sein. Es kann aber im Sinne der Erfindung auch bevorzugt sein, dass ein Permanentmagnet verwendet wird, der dazu eingerichtet ist, translatorisch über den Ankergeschoben zu werden, um einen ähnlichen Effekt erzielen wie der Elektromagnet. Im Folgenden wird die Erfindung insbesondere anhand eines Elektromagneten erläutert.

Es ist im Sine der Erfindung bevorzugt, dass das Ventilelement als Ventilteller ausgebildet ist oder als "Dichtelement" bezeichnet wird. Es handelt sich bei dem bevorzugt als Ventilteller ausgebildeten Ventilelement vorzugsweise um eine beweglich ausgebildete Komponente des vorgeschlagenen Ventils, das in einer Offen-Stellung bzw. in einer Offen-Position von einem Ventilsitz abgehoben und getrennt vorliegt und in einer Geschlossen-Stellung oder in einer Geschlossen-Position auf dem Ventilsitz angeordnet vorliegt. Es ist im Sinne der Erfindung bevorzugt, dass der Ventilteller den Ventilsitz im der Geschlossen-Stellung abdichtet, so dass ein Fluiddurchgang durch das Ventil in der Geschlossen-Stellung verhindert wird. In der Offen-Stellung des Ventils ist ein Durchgang von Fluid durch das Ventil möglich. Die Offen-Stellung wird im Sinne der Erfindung auch als geöffnete Stellung bezeichnet, während die Geschlossen-Stellung als geschlossene Stellung des Ventils bezeichnet wird. Im Folgenden wird die Erfindung insbesondere anhand eines bevorzugt als Ventilteller ausgebildeten Ventilelements erläutert.

Die Ankerscheibe des vorgeschlagenen Ventils ist vorzugsweise in dem Sinne zweiteilig ausgebildet, dass die Ankerscheibe mindestens einen ersten und einen zweiten Ankerbereich aufweist. Mit der Erfindung kann insbesondere ein sog. Stufenanker für Elektromagnetanwendungen zur Optimierung einer Magnetkraftreichweite in einem Ventil bereitgestellt werden. Dabei kann ein zwei- oder mehrstufiger Magnetanker zur Erhöhung der Anzugsreichweite eines Elektromagneten verwendet werden. Die Ankerscheibe kann mindestens zwei Ankerbereiche aufweisen. Beispielsweise kann die Ankerscheibe aus zwei, drei, vier oder mehr Ankerbereichen zusammengesetzt sein, wobei die äußeren Ankerbereiche vorzugsweise ringförmig ausgebildet sind.

Es ist im Sinne der Erfindung bevorzugt, dass das Ventil einen Elektromagneten umfasst, der in einem oberen Bereich des Ventils, d.h. oberhalb des Ventiltellers, angeordnet vorliegt. Der Ventilteller liegt auf einem Ventilsitz auf, wobei der Ventilsitz Öffnungen umfasst, die in der geschlossenen Stellung des Ventils von dem Ventilteller verschlossen werden. In der geschlossenen Stellung trägt ein Abstand zwischen der Ankerscheibe und dem Elektromagneten den Wert "s1". Mit anderen Worten sind die Ankerscheibe und der Elektromagnet um eine Strecke s1 voneinander entfernt. Vorzugsweise wird die mindestens eine Öffnung, die mit dem Ventilteller verschließbar ist, von dem Ventilsitz gebildet. In der geöffneten Stellung des Ventils sind die Öffnungen offen und für einen Luftstrom durchgängig. Durch diese Öffnung kann beispielsweise ein Rückspülluftstrom oder ein Strom komprimierter Luft fließen, wenn das vorgeschlagenen Ventil in einem Sauggerät verwendet wird, um die Abreinigung der Filter in dem Sauggerät zu ermöglichen. Mit anderen Worten kann mit der Erfindung eine sehr wirkungsvolle Abreinigung der Filter eines Sauggeräts ermöglicht werden. Der Elektromagnet ist dazu eingerichtet, eine elektromagnetische Kraft auf den Ventilteller auszuüben und den Ventilteller insbesondere anzuziehen, um ihn aus einer geschlossenen Stellung in eine geöffnete Stellung zu bringen. Um von dem Elektromagneten angezogen zu werden, liegt an dem Ventilteller - vorzugsweise an seiner Oberseite, die dem Elektromagneten zugewandt ist - eine Ankerscheibe vor. Die Ankerscheibe umfasst vorzugsweise ein magnetisches Material, vorzugsweise ein magnetisches bzw. ferromagnetisches Metall, oder die Ankerscheibe ist aus einem solchen magnetischen oder ferromagnetischen Material bzw. Metall gebildet. Es ist im Sinne der Erfindung bevorzugt, dass insbesondere der erste Ankerbereich der Ankerscheibe ferromagnetisch ausgebildet ist oder ein ferromagnetisches Material umfasst. Dadurch kann vorteilhafterweise erreicht werden, dass insbesondere der erste Ankerbereich von dem Elektromagneten angezogen und angehoben wird. Der zweite Ankerbereich muss überraschenderweise nicht ferromagnetisch ausgebildet sein oder ein ferromagnetisches Material umfassen. Es hat sich gezeigt, dass die Trägheits- bzw. Beschleunigungskräfte in dem vorgeschlagenen Ventil ausgenutzt werden können, um den Ventilteller besonders dynamisch bewegen zu können.

Die Ankerscheibe ist in dem Sinne zweiteilig ausgebildet, dass die Ankerscheibe einen äußeren Ankerscheibenring aufweist, der im Sinne der Erfindung bevorzugt als "erster Ankerbereich" bezeichnet wird. Der erste Ankerbereich bzw. der äußere Ankerscheibenring ist vorzugsweise in Bezug auf den Ventilteller beweglich ausgebildet, d.h. der erste Ankerbereich kann sich vorzugsweise unabhängig bzw. getrennt von dem Ventilteller bewegen. Der zweite Ankerbereich kann von einem inneren Bereich der Ankerscheibe gebildet werden, wobei der zweite Ankerbereich vorzugsweise fest bzw. starr mit dem Ventilteller verbunden vorliegt. Selbstverständlich kann die Ankerscheibe auch mehr als zwei Ankerbereiche umfassen und dadurch mehrteilig ausgebildet sein.

Es ist im Sinne der Erfindung bevorzugt, dass sich die Ankerbereiche der Ankerscheibe separat voneinander bewegen können. Das bedeutet im Sinne der Erfindung bevorzugt, dass eine Bewegung oder ein Anheben des ersten Ankerbereichs nicht automatisch zu einer Bewegung des zweiten Ankerbereichs führt. Vielmehr ist es im Sinne der Erfindung bevorzugt, dass sich die Ankerbereiche unabhängig voneinander bewegen können, zumindest in einem gewissen Rahmen. Dieser Rahmen, in dem sich die Ankerbereiche unabhängig voneinander bewegen können, wird insbesondere von der strukturellen Ausgestaltung der Ankerbereiche festgelegt. Die Ankerbereiche weisen vorzugsweise vorstehenden Elemente oder Nasen auf, die so ineinander greifen oder so miteinander zusammen wirken können, dass der zweite Ankerbereich angehoben wird, wenn sich der erste Ankerbereich um eine Wegstrecke delta s1 nach oben bewegt

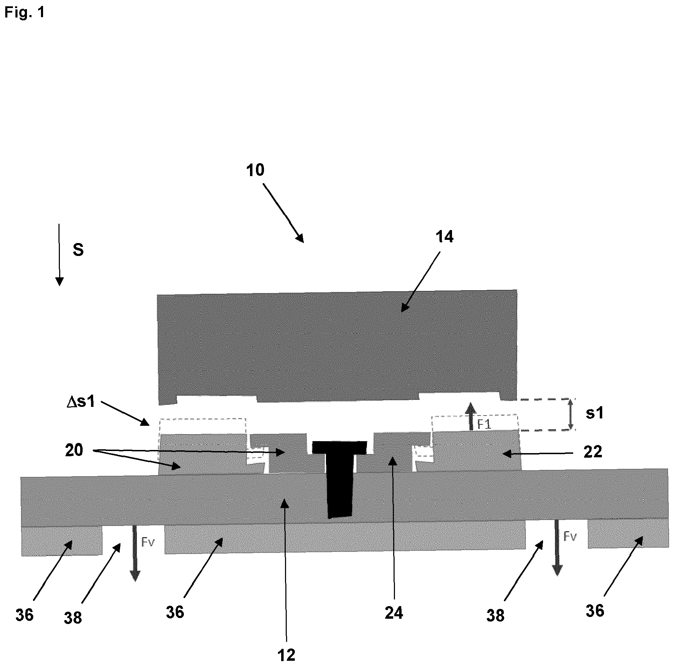

Da der zweite Ankerbereich vorzugsweise fest mit dem Ventilteller verbunden vorliegt, wird der gesamte Ventilteller durch diese Bewegung des zweiten Ankerbereichs bzw. durch dessen Anheben, ebenfalls angehoben und von dem Ventilsitz abgehoben, wenn die Wegstrecke, die der erste Ankerbereich zurücklegt, die Wegstrecke delta s1 überschreitet. Diese Wegstrecke, die die Wegstrecke delta s1 überschreitet, wird im Sinne der Erfindung als Wegstrecke delta s2 bezeichnet. Die Wegstrecke delta s1 kann im Sinne der Erfindung bevorzugt als erste Wegstrecke bezeichnet werden, während die Wegstrecke delta s2 vorzugsweise als zweite Wegstrecke bezeichnet werden kann. Durch das Abheben des Ventiltellers von dem Ventilsitz kann das Ventil bzw. der Ventilteller von der geschlossenen Stellung in die geöffnete Stellung überführt werden. Der Ablauf einer solchen Öffnung des Ventils kann in den Figuren 1 bis 4 nachvollzogen werden.

Charakteristisch für das vorgeschlagene Ventil ist es demnach, dass sich die Ankerbereiche des Ventils im Bereich einer Wegstrecke delta s1 unabhängig voneinander bewegen können, wobei anschließend, d.h. nach Überschreiten der ersten Wegstrecke delta s1, eine Kopplung zwischen den Ankerbereichen zu wirken beginnt, wobei diese Kopplung der Bewegungen der Ankerbereiche vorzugsweise von der strukturellen Ausgestaltung der Ankerbereiche bewirkt wird. Durch das Ineinandergreifen der vorstehenden Elemente der Ankerbereiche wird der zweite Ankerbereich durch ein fortschreitendes Anheben des ersten Ankerbereichs über die Wegstrecke delta s1 hinaus mit angehoben. Dadurch, dass der zweite Ankerbereich - anders als der erste Ankerbereich - fest mit dem Ventilteller verbunden vorliegt, wird der Ventilteller durch dieses Anheben des zweiten Ankerbereichs mit angehoben und das Ventil auf diese Weise geöffnet.

Mit anderen Worten bewegt sich der erste Ankerbereich im Bereich einer Wegstrecke delta s1 zunächst alleine und unabhängig von dem zweiten Ankerbereich, wobei der erste Ankerbereich den zweiten Ankerbereich aufgrund der strukturellen Ausgestaltung der Ankerbereich bei einer über die Wegstrecke delta s hinausgehenden (Hub-)Bewegung mitnimmt und ihn, d.h. den zweiten Ankerbereich, mit anhebt. Aufgrund der starren Verbindung zwischen dem zweiten Ankerbereich und dem Ventilteller wird dadurch auch der Ventilteller angehoben und das Ventil geöffnet. Es ist im Sinne der Erfindung bevorzugt, dass der Elektromagnet als Aktuator für den ersten Ankerbereich fungiert. Mit anderen Worten kann der erste Ankerbereich von dem Elektromagneten angezogen und angehoben werden. Dies wird im Kontext der vorliegenden Erfindung insbesondere dadurch ermöglicht, dass der erste Ankerbereich ferromagnetisch ausgebildet ist bzw. ein ferromagnetisches Material umfasst.

Die über die Wegstrecke delta s hinausgehenden (Hub-)Bewegung des ersten Ankerbereichs wird im Sinne der Erfindung als Wegstrecke delta s2 oder als zweite Wegstrecke bezeichnet.

Mit Hilfe der Erfindung, insbesondere durch das versetzt oder nacheinander stattfindende Anheben der Ankerbereiche der zweiteiligen Ankerscheibe, kann vorteilhafterweise eine stufenartige Reduzierung des Luftspaltes bzw. des Abstands zwischen Elektromagneten und Ankerscheibe erreicht werden. Es stellt einen wesentlichen Vorteil der Erfindung dar, dass die einzelnen Bewegungsstufen der Ankerbereiche äußerst geschickt und passend mit den Kraft- bzw. Druckverhältnissen im Sauggerät zusammenfallen, so dass sich synergistische Effekte ergeben, die über das zu erwartende Maß bei Verwendung eines Ventils zur Unterstützung einer Filterabreinigung deutlich hinausgehen. Zwar muss für das erste Anheben des ersten Ankerbereichs um die Wegstrecke delta s1 eine nicht geringe Energiemenge aufgebracht werden, da ein Abstand zwischen Ankerscheibe bzw. erstem Ankerbereich und Elektromagnet in der geschlossenen Stellung des Ventils noch sehr groß, genauer gesagt maximal, ist. Diese nicht geringe Energiemenge zum Anheben des ersten Ankerbereichs um eine Wegstrecke delta s1 entspricht vorzugsweise einer ersten Kraft F1, wobei die erste Kraft F1 und die Energiemenge E über die Relationen

$$\text{Energie E = Kraft F1 mal Wegstrecke delta s1}$$

$$E = F1 \cdot \Delta s1$$

miteinander verknüpft sind. Die Kraft F1 ist vorteilhafterweise ausreichend groß, um den ersten Ankerbereich anzuheben. Nach dem ersten Anheben des ersten Ankerbereichs beträgt der Abstand zwischen der ersten Ankerscheibe, insbesondere dem ersten Ankerbereich, und dem Elektromagneten "nur noch" s2, wobei der ursprüngliche Abstand s1 zwischen Ankerscheibe und Elektromagnet größer ist als der reduzierte Abstand s2 zwischen erstem Ankerbereich und Elektromagneten nach dem ersten Anheben des ersten Ankerbereichs: s1 > s2.

Durch das Anheben des ersten Ankerbereichs reduziert sich vorteilhafterweise der Abstand zwischen Elektromagneten und Ankerscheibe, so dass die Ankerscheibe immer stärker von dem Elektromagneten angezogen wird, so dass jede weitere Bewegung der Ankerscheibe in Richtung des Elektromagneten leichter fällt und dadurch weniger Energie benötigt wird. Mit anderen Worten wird die Ankerscheibe immer stärker von dem Elektromagneten angezogen, da die Ankerscheibe dem Elektromagneten immer näher kommt. Es war vollkommen überraschend, dass die sich nun ausbildende Kraft F2, die im Bereich der Wegstrecke delta s2 wirkt, ausreichend groß ist, um den zweiten Ankerbereich und damit auch den gesamten Ventilteller anzuheben. Die Kraft F2 stellt vorzugsweise die elektromagnetische Kraft dar, die von dem Elektromagneten ausgeht und auf die Ankerscheibe wirkt. Aufgrund des geringeren Abstands, der durch das Anheben des ersten Ankerbereichs bewirkt wird, ist die Kraft F2 größer als die Kraft F1. Die Kraft F2 ist insbesondere so groß, dass sowohl der zweite Ankerbereich, als auch der gesamte Ventilteller angehoben werden können. Die Wegstrecke delta s2 entspricht vorzugsweise dem Abstand s2 zwischen dem ersten Ankerbereich und dem Elektromagneten.

Das Anheben des zweiten Ankerbereichs wird insbesondere dadurch bewirkt, dass die Ankerbereiche vorstehende Elemente aufweisen, die die Kopplung zwischen den Ankerbereichen vermitteln. Mögliche Ausgestaltungen der vorstehenden Elemente sind in den Figuren abgebildet. Es ist im Sinne der Erfindung ganz besonders bevorzugt, dass das mindestens eine vorstehende Element des ersten Ankerbereichs im Bereich einer Unterseite des ersten Ankerbereichs angeordnet ist und/oder das mindestens eine vorstehende Element des zweiten Ankerbereichs im Bereich einer Oberseite des zweiten Ankerbereichs angeordnet ist. Dadurch kann das vorstehende Element des ersten Ankerbereichs von unten gegen das vorstehende Element des zweiten Ankerbereichs drücken und den zweiten Ankerbereich so mit anheben. Selbstverständlich kann die Anordnung der Ankerbereiche und/oder der vorstehenden Elemente auch umgekehrt erfolgen. Beispielsweise können die vorstehenden Elemente des ersten Ankerbereichs im Bereich einer Oberseite des ersten Ankerbereichs angeordnet sein und/oder die vorstehenden Elemente des zweiten Ankerbereichs im Bereich einer Unterseite des zweiten Ankerbereichs angeordnet sein. Die Anlageflächen sind dann entsprechend umgekehrt zu obiger Beschreibung. Es kann im Sinne der Erfindung auch bevorzugt sein, dass der bewegliche Ankerbereich im Inneren der Ankerscheibe angeordnet vorliegt und der ortsfeste Ankerbereich einen äußeren Ring der Ankerscheibe darstellt.

Es ist im Sinne der Erfindung bevorzugt, dass die vorstehenden Elemente der Ankerbereiche überlappende Ankerzonen bilden, die einen Mitnahmeeffekt der Ankerbereiche ermöglichen. Der Begriff "Mitnahmeeffekt" bedeutet im Sinne der Erfindung bevorzugt, dass der zweite Ankerbereich und der mit dem zweiten Ankerbereich verbundene Ventilteller von dem ersten Ankerbereich mit angehoben werden, wenn insbesondere der erste Ankerbereich aufgrund seines geringen Abstands s2 von dem Elektromagneten angezogen wird.

Durch das weitere Anheben der Ankerscheibe kann der erste Ankerbereich in Kontakt mit dem Elektromagneten kommen. Durch das Anheben des Ventiltellers öffnet sich das Ventil leicht. Dieses erste Öffnen des Ventils wird insbesondere durch ein Anheben des Ventiltellers um einen ersten Hub h1 bewirkt. Durch das leichte Anheben des Ventiltellers und das Freigeben der Öffnungen in dem Ventilsitz, kommt es zu einem Fluidaustausch bzw. Druckausgleich zwischen den vormals voneinander getrennten Ventilbereichen, so dass eine Kraft FV, die das Ventil bisher geschlossen hielt und die mit der Schwerkraft S zusammenfällt, minimal wird. Dadurch ist die Anziehungskraft des Elektromagneten, die in dieser Phase als dritte Kraft F3 bezeichnet wird, so groß, dass der zweite Ankerbereich und der mit ihm verbundene Ventilteller weiter angezogen bzw. angehoben werden können, bis auch der zweite Ankerbereich mit dem Elektromagneten in Kontakt vorliegt. Durch das weitere Anheben des zweiten Ankerbereichs und des Ventiltellers kann das Ventil weiter geöffnet werden, und zwar um einen zweiten Hub h2. Wenn der Ventilteller um den Gesamthub h1 + h2 angehoben ist, ist die Überführung des Ventils von der geschlossenen Stellung in die geöffnete Stellung abgeschlossen. Das weitere Anheben des Ventiltellers um den zweiten Hub h2 wird vorteilhafterweise von den Kraft- bzw. Druckverhältnissen im Sauggerät begünstigt.

Auf diese Weise ergibt sich ein ausgesprochen geschicktes und förderliches Ineinandergreifen von mechanischen und pneumatischen Vorgängen, die zu einer äußerst energieeffizienten Möglichkeit, ein Ventil zu öffnen, führen. Wenn das vorgeschlagene Ventil in einem batteriebetriebenen Sauggerät, beispielsweise einem Akkusauger, eingesetzt wird, um die Filterabreinigung durchzuführen oder zu unterstützen, kann die Laufzeit der Batterie vergrößert werden, so dass ein Wechsel der Batterie bzw. des Akkumulators ("Akkus") hinausgezögert werden kann.

Es ist im Sinne der Erfindung bevorzugt, dass die Ankerbereiche zumindest teilweise getrennt bzw. unabhängig voneinander bewegbar sind. Dadurch kann im Kontext der vorliegenden Erfindung ermöglicht werden, dass sich die Ankerbereiche zeitlich versetzt zueinander in eine Raumrichtung «nach oben», d.h. in Richtung des Elektromagneten, bewegen. Die im Wesentlichen getrennte bzw. unabhängige Beweglichkeit der Ankerbereich besteht insbesondere im Bereich der ersten Wegstrecke delta s1.

Es ist im Sinne der Erfindung bevorzugt, dass die Ankerbereiche im Bereich einer Wegstrecke delta s1 getrennt und/oder unabhängig voneinander bewegt werden können und eine Bewegung des ersten Ankerbereichs im Bereich einer Wegstrecke delta s2 mit einer Bewegung des zweiten Ankerbereichs gekoppelt ist. Vorzugsweise kann die Kopplung der Bewegungen der Ankerbereiche im Bereich der Wegstrecke delta s2 durch eine strukturelle Ausgestaltung der Ankerbereich bewirkt werden. Es ist im Sinne der Erfindung bevorzugt, dass die Ankerbereiche vorstehende Elemente aufweisen, die die Kopplung zwischen den Ankerbereichen vermitteln. Mit anderen Worten können die vorstehenden Elemente der Ankerbereiche dazu ausgebildet sein, die Kopplung zwischen den Ankerbereichen zu vermitteln. Es ist im Sinne der Erfindung bevorzugt, dass die vorstehenden Elemente die strukturelle Ausgestaltung der Ankerbereiche prägen. Vorzugsweise kann es sich bei den vorstehenden Elementen zum Aufbau einer Kopplung zwischen den Ankerbereichen um seitliche vorstehende Elemente handeln.

Es ist im Sinne der Erfindung bevorzugt, dass der erste Ankerbereich in Bezug auf den Ventilteller beweglich ausgebildet ist und der zweite Ankerbereich mit dem Ventilteller verbunden vorliegt. Vorzugsweise ist die Ankerscheibe auf einer Oberseite des Ventiltellers angeordnet, wobei die Oberseite des Ventiltellers dem Elektromagneten zugewandt ist. Vorzugsweise ist der Elektromagnet oberhalb des Ventiltellers angeordnet, so dass ein Anheben des Ventiltellers entgegen der Schwerkraft erfolgt, während eine Rückkehr des Ventiltellers auf den Ventilsitz vorzugsweise in Richtung der Schwerkraft erfolgt, wenn das Ventil entsprechend ausgerichtet ist oder in entsprechender Weise in einem Elektrogerät, wie einem Staubsauger integriert vorliegt. Es ist im Sinne der Erfindung bevorzugt, dass das Öffnen des Ventils durch ein Anheben des Ventiltellers erfolgt, dass so die Überführung des Ventils von einer geschlossenen in eine geöffnete Stellung entgegen der Schwerkraft erfolgt, während ein (Wieder-)Verschließen des Ventils vorzugsweise in Richtung der Schwerkraft erfolgt.

Es ist im Sinne der Erfindung bevorzugt, dass die anziehende Wirkung des Elektromagneten auf den Ventilteller von einer Ankerscheibe vermittelt wird, die vorzugsweise auf einer Oberseite des Ventiltellers angeordnet vorliegt. Dabei stellt die Oberseite des Ventiltellers vorzugsweise die dem Elektromagneten zugewandte Seite des Ventiltellers dar. Mit anderen Worten wirkt die anziehende Magnetkraft des Elektromagneten insbesondere auf die mehrteilig ausgebildete Ankerscheibe bzw. ihre Bestandteile. Das bedeutet im Sinne der Erfindung bevorzugt, dass die Ankerscheibe bzw. ihre Bestandteile von dem Elektromagneten angezogen oder abgestoßen werden können.

Es ist im Sinne der Erfindung bevorzugt, dass mindestens einer der Ankerbereiche mindestens ein nach oben ragendes Element aufweist. Es ist im Sinne der Erfindung bevorzugt, dass es sich bei den vorstehenden Elementen zum Aufbau einer Kopplung zwischen den Ankerbereichen um seitliche vorstehende Elemente handelt. Darüber hinaus können der erste und/oder der zweite Ankerbereich nach oben über eine Oberseite der Ankerscheibe hinausragende vorstehende Elemente aufweisen, die die Ankerbereiche wie eine Krone aussehen lassen. Es ist im Sinne der Erfindung bevorzugt, von einer kronenartigen Ausbildung der Ankerbereiche zu sprechen, wenn die Ankerbereiche nach oben ragende vorstehende Elemente aufweisen. Mögliche Ausgestaltungen der nach oben ragenden vorstehenden Elemente sind in den Figuren abgebildet.

Es hat sich gezeigt, dass die kronenartige Ausbildung der Ankerscheibe den Luftspalt zwischen Elektromagnet und Ankerscheibe im geschlossenen Zustand des Ventils verringert. Die kronenartige Ausbildung der Ankerscheibe ist insbesondere dann von Vorteil, wenn die Ankerscheibe mehr als zwei Ankerbereiche umfasst. Vorzugsweise kann jeder Ankerbereich ein nach oben ragendes Element umfassen, wobei die Ankerbereiche selbstverständlich auch mehr als ein oder unterschiedlich viele nach oben ragende Elemente umfassen können. Vorteilhafterweise kann mit Hilfe des mindestens einen nach oben ragenden Elements der Abstand zwischen Elektromagnet und Ankerscheibe verringert werden, der von der elektromagnetischen Kraft überwunden werden muss, um den ersten, d.h. beweglich ausgebildeten Ankerbereich anzuziehen bzw. anzuheben. Dadurch verringert sich vorteilhafterweise auch die Kraft, die aufgebracht werden muss, um den beweglich ausgebildeten Ankerbereich anzuheben und das Ventil zu öffnen.

Es ist im Sinne der Erfindung bevorzugt, dass die mindestens eine Öffnung, die mit dem Ventilteller verschließbar ist, von dem Ventilsitz gebildet wird, wobei der Ventilsitz vorzugsweise eine Gegenkontur zum Ventilteller darstellt. Im geschlossenen Zustand des Ventils liegen Ventilsitz und Ventilteller verbunden miteinander vor, so dass kein Fluid zwischen Ventilsitz und Ventilteller hindurchgelangen kann, während im geöffneten Zustand des Ventils Ventilsitz und Ventilteller getrennt voneinander vorliegen, so dass Fluid zwischen Ventilsitz und Ventilteller hindurchgelangen kann und beispielsweise ein Luftstrom zwischen den vormals voneinander getrennten Bereich fließen kann. Durch den Fluiddurchgang bzw. den Luftstrom kann ein Druckausgleich zwischen dem Bereich unterhalb des Ventils und dem Bereich oberhalb des Ventils ermöglicht werden. Der Bereich unterhalb des Ventils kann beispielsweise den Staubsammelbehälter umfassen, wenn das Ventil in einem Sauggerät angeordnet vorliegt, während der Bereich oberhalb des Ventils beispielsweise die Turbine umfassen kann, wenn das Ventil in einem Sauggerät angeordnet vorliegt. Ein abzureinigender Filter kann beispielsweise in dem Bereich unterhalb des Ventils innerhalb des Sauggeräts angeordnet vorliegen.

In einem zweiten Aspekt betrifft die Erfindung eine Verwendung des vorgeschlagenen Ventils zur Durchführung einer Filterabreinigung in einem Sauggerät. In einem weiteren Aspekt betrifft die Erfindung ein Sauggerät mit einem vorgeschlagenen Ventil. Die für das Ventil eingeführten Begriffe, Definitionen und technischen Vorteile gelten vorzugsweise für die Verwendung des Ventils und das Sauggerät analog. Es ist im Sinne der Erfindung bevorzugt, dass das Sauggerät ein batteriebetriebenes Sauggeräts ist. Selbstverständlich kann es sich bei dem Sauggerät auch um einen Netzsauger mit einem Stromkabel handeln. Während mit der Erfindung bei den batteriebetriebenen Sauggeräten die Batterie geschont und ihre Laufzeit verlängert werden kann, ermöglicht die Erfindung bei Netzsaugern die Verwendung von kleineren und dadurch kostengünstigeren Magneten, die darüber hinaus energieeffizienter betrieben werden können. Somit kann die Erfindung erhebliche Vorteile sowohl im Bereich der Netz-, als auch im Bereich der batteriebetriebenen Sauggeräte bringen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1 bis 4:    Ansichten einer bevorzugten Ausgestaltung des vorgeschlagenen Ventils zu unterschiedlichen Zeiten eines Öffnungsvorgangs des Ventils

Fig. 5 und 6:    Ansichten einer bevorzugten Ausgestaltung des vorgeschlagenen Ventils, wobei je ein Ankerbereich kronenartig ausgebildet ist und mindestens ein nach oben ragendes Element aufweist

**Ausführungsbeispiele und Figurenbeschreibung:**

Die Figuren 1 bis 4 zeigen Ansichten einer bevorzugten Ausgestaltung des vorgeschlagenen Ventils 10 zu unterschiedlichen Zeiten eines Öffnungsvorgangs des Ventils 10. Das Ventil 10 umfasst einen Elektromagneten 14 und ein Ventilelement 12, wobei das Ventilelement 12 bevorzugt als Ventilteller 12 ausgebildet ist und in einer geschlossenen Stellung Öffnungen 38 eines Ventilsitzes 36 verschließt. Der Ventilsitz 36 stellt vorzugsweise eine Gegenkontur des Ventiltellers 12 dar. Damit der Ventilteller 12 von dem Elektromagneten 14 magnetisch angezogen wird, weist der Ventilteller 12 auf seiner Oberseite 34 eine Ankerscheibe 20 auf, die aus einem ferromagnetischen Material gefertigt ist oder ein ferromagnetisches Material umfasst. Die Ankerscheibe 20 kann insbesondere aus einem magnetischen Metall oder einer magnetischen Legierung gefertigt sein oder ein magnetisches Metall oder eine magnetische Legierung umfassen. Vorzugsweise ist der zweite Ankerbereich 24 nicht oder nicht vollständig aus einem ferromagnetischen Material gebildet, denn es hat sich gezeigt, dass vorteilhafterweise auch Trägheitskräfte ausgenutzt werden können, um den zweiten Ankerbereich 24 und den Ventilteller 12 zu bewegen, d.h. anzuheben. Die Ankerscheibe 20 ist zweiteilig ausgebildet und umfasst einen ersten Ankerbereich 22 und einen zweiten Ankerbereich 24. Wenn die Ankerscheibe 20 scheibenförmig ausgebildet ist, d.h. eine im Wesentlichen kreisförmige Grundform aufweist, kann der erste Ankerbereich 22 von einem äußeren Ring der Ankerscheibe 20 gebildet werden, während der zweite Ankerbereich 24 von einem inneren Bestandteil der Ankerscheibe 20 gebildet wird. In den Figuren 1 bis 6 ist insbesondere ein Schnitt durch ein vorgeschlagenes Ventil 10 dargestellt, so dass eine bevorzugte kreisförmige Ausgestaltung der Ankerscheibe 20 in den Figuren nur angedeutet ist. In Figur 1 ist das Ventil 10 in der geschlossenen Stellung abgebildet, wobei in der geschlossenen Stellung der Ventilteller 12 abdichtend auf dem Ventilsitz 36 angeordnet vorliegt und die Öffnungen 38 des Ventils 10 verschließt.

Der Elektromagnet 14 ist oberhalb des Ventiltellers 12 angeordnet, so dass eine Oberseite 34 des Ventiltellers 12 dem Elektromagneten 14 zugewandt angeordnet ist. In einem ersten Schritt zum Öffnen des Ventils 10 kann der erste Ankerbereich 22, der vorzugsweise in Bezug auf den Ventilteller 12 beweglich ausgebildet ist, von dem Elektromagneten 14 angezogen und dadurch um eine Wegstrecke delta s1 angehoben werden. Diese Hubbewegung des ersten Ankerbereichs 22 wirkt vorzugsweise der Schwerkraft S entgegen. Um die Hubbewegung auszuführen, muss eine Energiemenge E aufgebracht werden, die einer Kraft F1 entspricht. Die Energiemenge E wird insbesondere dafür benötigt, den Elektromagneten 14 zu bestromen, so dass ein magnetisches Feld erzeugt wird, mit dem der erste Ankerbereich 22 der Ankerscheibe 20 angezogen und angehoben werden kann.

Mit dem Bezugszeichen FV wird die Ventilkraft bezeichne, die vorzugsweise ein Produkt aus Unterdruck unterhalb des Ventiltellers 12 und der Öffnungsfläche 38 darstellt.

Durch das Anheben des ersten Ankerbereichs 22 verkürzt sich der Abstand zwischen dem ersten Ankerbereich 22 und dem Elektromagneten 14, wobei der ursprüngliche Abstand zwischen dem ersten Ankerbereich 22 und dem Elektromagneten 14, wie er beispielsweise in der geschlossenen Stellung des Ventils 10 vorliegt, mit dem Bezugszeichen «s1» bezeichnet wird. Das Anheben des ersten Ankerbereichs 22 ist in Figur 1 bereits durch gestrichelte Linien angedeutet.

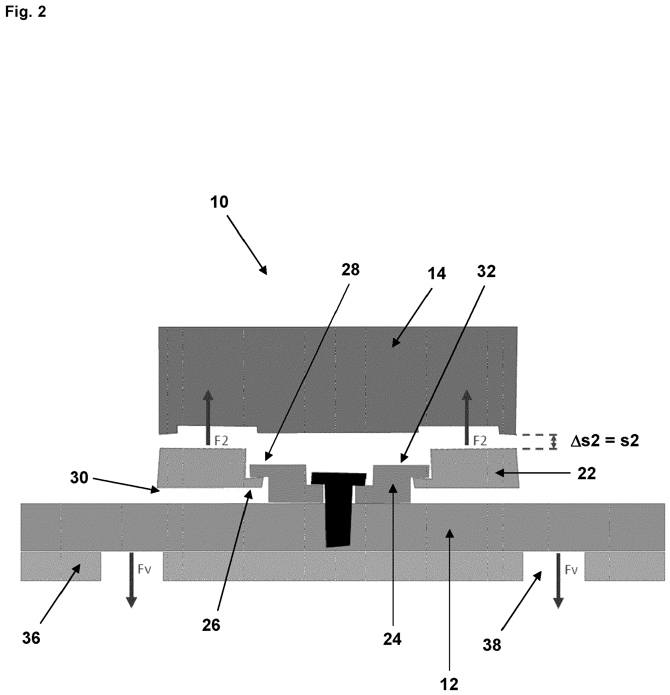

Figur 2 zeigt ein Stadium des Öffnungsvorgangs des Ventils 10, bei dem der erste Ankerbereich 22 bereits um eine Wegstrecke delta s1 angehoben ist. Der neue Abstand zwischen dem ersten Ankerbereich 22 und dem Elektromagneten 14 wird mit dem Bezugszeichen «s2» bezeichnet, wobei der Abstand s2 der zweiten Wegstrecke delta s2 entspricht, um die der erste Ankerbereich 22 nach dem ersten Anheben noch bewegt werden muss, um in die Nähe des Elektromagneten 14 zu gelangen. Es hat sich gezeigt, dass es ausreicht, wenn der erste Ankerbereich 22 in die räumliche Nähe des Elektromagneten 14 gelangt. Vorzugsweise bleibt zwischen dem ersten Ankerbereich 22 und dem Elektromagneten 14 ein Luftspalt oder eine Trennschicht bestehen. Es hat sich gezeigt, dass dadurch die Dynamik des Ventils 10 erheblich verbessert werden kann.

In dem in Figur 2 dargestellten Stadium des Öffnungsvorgangs des Ventils 10 gelangen die vorstehenden Elemente 26, 28 der Ankerbereiche 22, 24 der Ankerscheibe 20 in Kontakt miteinander oder in räumliche Nähe zueinander. Das mindestens eine vorstehende Element 26 des ersten Ankerbereichs 22 liegt vorzugsweise im Bereich einer Unterseite 30 des ersten Ankerbereichs 22 vor, während das mindestens eine vorstehende Element 28 des zweiten Ankerbereichs 24 im Bereich einer Oberseite 32 des zweiten Ankerbereichs 24 angeordnet vorliegt. Der vorzugsweise beweglich ausgebildete erste Ankerbereich 22 wird durch die Anziehung des Elektromagneten 14 in eine Raumrichtung nach oben, d.h. in Richtung des Elektromagneten 14, bewegt, wobei das vorstehende Element 26 des ersten Ankerbereichs 22 dabei von unten gegen das vorstehende Element 28 des zweiten Ankerbereichs 24 drückt und den zweiten Ankerbereich 24 dadurch mit anhebt bzw. nach oben mitbewegt. Da der zweite Ankerbereich 24 fest mit dem Ventilteller 12 verbunden vorliegt, wird durch die Bewegung des zweiten Ankerbereichs 24 auch der Ventilteller 12 in eine Raumrichtung nach oben bewegt, so dass sich der Ventilteller 12 von dem Ventilsitz 36 trennt. Dadurch wird das Ventil 10 geöffnet, d.h. von der geschlossenen Stellung in eine geöffnete Stellung überführt. Das Schließen des Ventils 10 geschieht analog vorzugsweise ebenfalls in Stufen, d.h. durch zeitlich versetzte Abwärtsbewegungen der Ankerbereiche 22, 24 des vorgeschlagenen Ventils 10.

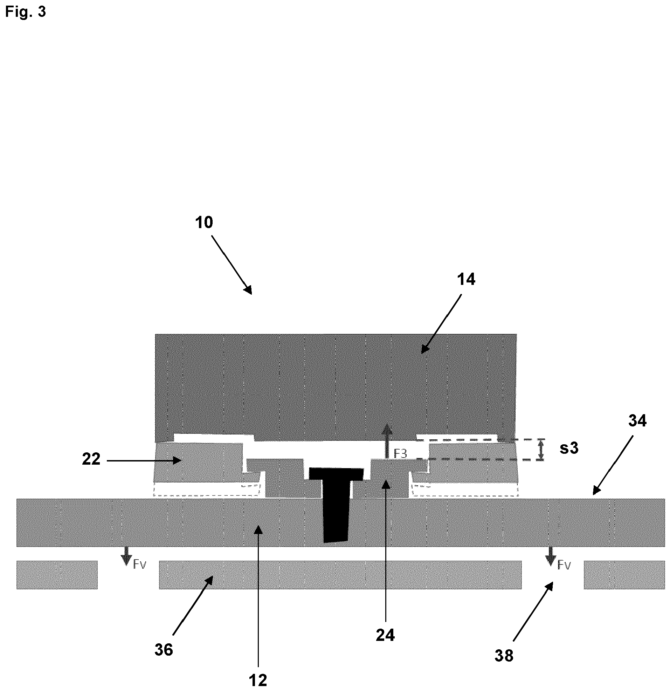

Figur 3 zeigt den Fortgang des weiteren Bewegungsvorgangs innerhalb des Ventils 10. Dargestellt ist in Figur 3, dass sich eine Bewegung des zweiten Ankerbereichs 24 von einer Bewegung des ersten Ankerbereichs 22 entkoppelt, so dass der zweite Ankerbereich 24 von einer Kraft F3 in seine Endposition bewegt werden kann.

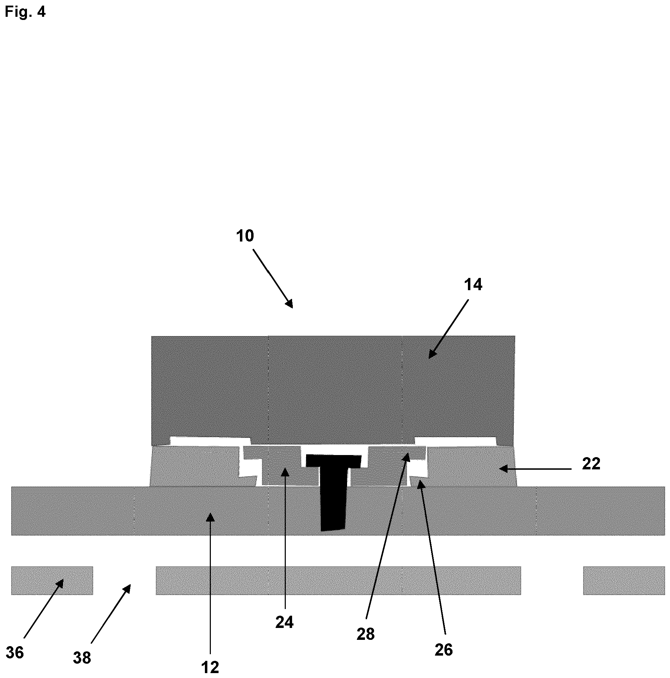

Durch die sich immer weiter verkürzenden Abstände zwischen den Ankerbereichen 22, 24 und dem Elektromagneten 14 wird die magnetische Kraft auf die Ankerbereiche 22, 24 der bevorzugt magnetisch ausgebildeten Ankerscheibe 20 immer größer, bis sie schließlich ausreicht, den gesamten Komplex aus zweitem Ankerbereich 24 und Ventilteller 12 anzuheben und in Richtung des Elektromagneten 14 zu bewegen. Dadurch kann auch der zweite Ankerbereich 24 in Kontakt mit oder in räumliche Nähe zu der Unterseite des Elektromagneten 14 gelangen und das Ventil 10 ist maximal geöffnet. Diese Situation wird in Figur 4 dargestellt. Damit ist der Öffnungsvorgang des Ventils 10, bei dem der Ventilteller 12 von einer geschlossenen Stellung in eine geöffnete Stellung überführt wird, abgeschlossen. Durch das Öffnen des Ventils 10 kann insbesondere ein Fluidaustausch zwischen den vormals voneinander getrennten Bereichen des Ventils (oberhalb und unterhalb des Ventiltellers 12) bewirkt werden. Außerdem kann es zu einem Druckaustausch zwischen den unterschiedlichen Bereichen des Ventils 10 kommen. Insbesondere wenn das vorgeschlagene Ventil 10 in einem Sauggerät, wie einem Staubsauger (nicht dargestellt) eingesetzt wird, um eine Filterabreinigung zu unterstützen, können die Druckverhältnisse während des Saugbetriebs bzw. während der Filterabreinigung das Öffnen und Schließen des Ventils 10 begünstigen. Auf diese Weise wird ein überraschender synergetischer Effekt erzielt, der eine besonders energiesparende Filterabreinigung zur Folge hat und darüber hinaus die Laufzeit einer Batterie des Sauggeräts erheblich verlängern kann, wenn es sich bei dem Sauggerät um ein batteriebetriebenes Sauggerät handelt. Die Erfinder haben dieses günstige und geschickte Zusammenspiel der Druckverhältnisse in der Umgebung des Ventils 10 erkannt und schlagen mit der strukturellen Ausgestaltung des Ventils 10 eine besonders geschickte Ausgestaltung der Ankerbereiche 22, 24 und des Ventiltellers 12 vor, so dass die Ankerbereiche 22, 24 der Ankerscheibe 20 zeitlich versetzt zueinander angehoben werden können und der Ventilteller 12 durch das zeitlich versetzte Anheben der Ankerbereiche 22, 24 von der geschlossenen in die geöffnete Stellung gebracht werden kann. Das zeitlich versetzte Anheben der Ankerbereiche 22, 24 wird von der magnetischen Anziehung des Elektromagneten 14 bewirkt und durch die Kraftverhältnisse im Bereich des Ventils 10 besonders vorteilhaft unterstützt.

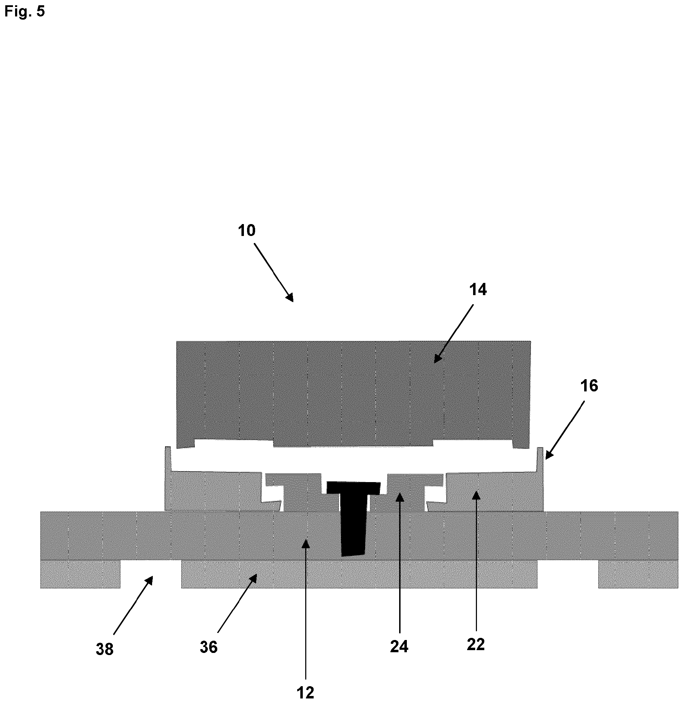

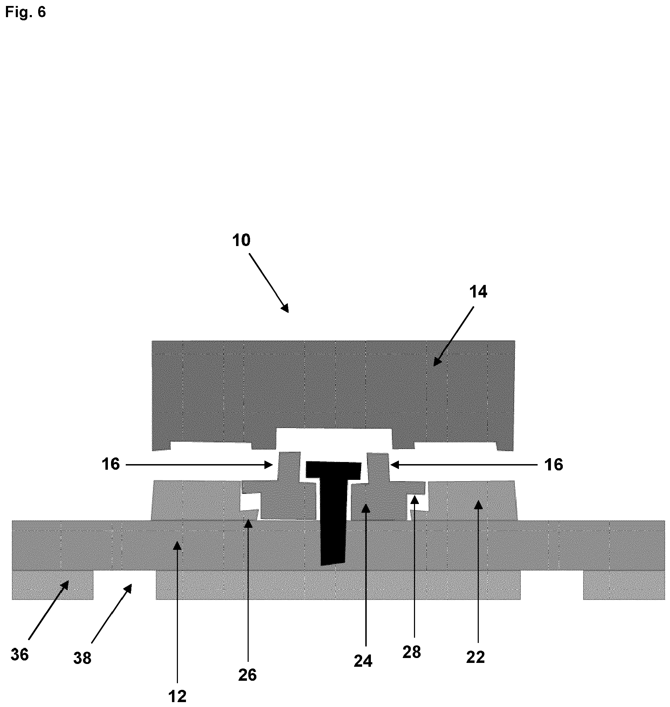

Die Figuren 5 und 6 zeigen kronenartig ausgebildete Ankerbereiche 22, 24 des vorgeschlagenen Ventils 10. Um kronenartig ausgebildet zu sein, können die Ankerbereiche 22, 24 nach oben ragende Elemente 16 aufweisen, die vorteilhafterweise dafür sorgen, dass sich ein Abstand zwischen der Ankerscheibe 20 und dem Elektromagneten 14 verringert, so dass vorteilhafterweise auch eine Kraft zum Anheben der Ankerscheibe 20 und/oder des Ventilelements 12 verringert wird.

In Figur 5 ist ein Ventil 10 dargestellt, bei dem der erste Ankerbereich 22 ein nach oben ragendes Element 16 aufweist, während bei dem in Figur 6 abgebildeten Ventil 10 der zweite Ankerbereich 24 ein nach oben ragendes Element 16 aufweist. Die nach oben ragenden Elemente 16 sind vorzugsweise dazu eingerichtet, einen Abstand zwischen der Ankerscheibe 20 bzw. dem ersten Ankerbereich 22 auf der einen Seite und dem Elektromagneten 14 auf der anderen Seite zu verringern. Dadurch kann die Kraft verringert werden, die vom Elektromagneten 14 aufgebracht werden muss, um die Ankerscheibe 20 bzw. den ersten Ankerbereich 22 anzuheben.

**Bezugszeichenliste**

| | |
|---|---|
| 10 | Ventil |
| 12 | Ventilelement, insbesondere Ventilteller |
| 14 | Magnet, insbesondere Elektromagnet |
| 16 | ein nach oben ragendes Element |
| 20 | Ankerscheibe |
| 22 | erster Ankerbereich |

| 24 | zweiter Ankerbereich |
| 26 | vorstehendes Element des ersten Ankerbereichs |
| 28 | vorstehendes Element des zweiten Ankerbereichs |
| 30 | Unterseite des ersten Ankerbereichs |
| 32 | Oberseite des zweiten Ankerbereichs |
| 34 | Oberseite des Ventiltellers |
| 36 | Ventilsitz |
| 38 | Öffnung |
| S | Schwerkraft |
| F1 | erste Kraft |
| F2 | zweite Kraft |
| F3 | dritte Kraft |
| FV | Ventil-Kraft |

**Patentansprüche**

1. Ventil (10) zur Freigabe oder zum Verschließen von mindestens einer Öffnung (38), wobei das Ventil (10) ein Ventilelement (12) aufweist, das in einer geschlossenen Stellung die mindestens eine Öffnung (38) verschließt und in einer geöffneten Stellung die mindestens eine Öffnung (38) freigibt, wobei das Ventilelement (12) von einem Magneten (14) von der geschlossenen Stellung in die geöffnete Stellung bringbar ist,
**dadurch gekennzeichnet, dass**
das Ventil (10) einen ersten Ankerbereich (22) und einen zweiten Ankerbereich (24) umfasst, wobei die Ankerbereiche (22, 24) zeitlich versetzt zueinander anhebbar sind und das Ventilelement (12) durch das zeitlich versetzte Anheben der Ankerbereiche (22, 24) von der geschlossenen in die geöffnete Stellung bringbar ist.

2. Ventil (10) nach Anspruch 1
**dadurch gekennzeichnet, dass**
die Ankerbereiche (22, 24) zumindest teilweise unabhängig voneinander bewegbar sind.

3. Ventil (10) nach Anspruch 1 oder 2
**dadurch gekennzeichnet, dass**
die Ankerbereiche (22, 24) durch ihre strukturelle Ausgestaltung dazu eingerichtet sind, dass der zweite Ankerbereich (24) angehoben wird, wenn sich der erste Ankerbereich (22) um eine Wegstrecke delta s1 nach oben bewegt hat.

4. Ventil (10) nach einem der vorhergehenden Ansprüche
**dadurch gekennzeichnet, dass**
die Ankerbereiche (22, 24) im Bereich einer Wegstrecke delta s1 unabhängig voneinander bewegbar sind und eine Bewegung des ersten Ankerbereichs (22) im Bereich einer Wegstrecke delta s2 mit einer Bewegung des zweiten Ankerbereichs (24) gekoppelt ist.

5. Ventil (10) nach Anspruch 4
**dadurch gekennzeichnet, dass**
die Kopplung der Bewegungen der Ankerbereiche (22, 24) im Bereich der Wegstrecke delta s2 durch eine strukturelle Ausgestaltung der Ankerbereiche (22, 24) bewirkt wird.

6. Ventil (10) nach Anspruch 4 oder 5
**dadurch gekennzeichnet, dass**
die Ankerbereiche (22, 24) vorstehende Elemente (26, 28) aufweisen, die die Kopplung zwischen den Ankerbereichen (22, 24) vermitteln.

7. Ventil (10) nach Anspruch 6
**dadurch gekennzeichnet, dass**
das mindestens eine vorstehende Element (26) des ersten Ankerbereichs (22) im Bereich einer Unterseite (30) des ersten Ankerbereichs (22) angeordnet ist und/oder das mindestens eine vorstehende Element (28) des zweiten Ankerbereichs (24) im Bereich einer Oberseite (32) des zweiten Ankerbereichs (24) angeordnet ist

8. Ventil (10) nach einem der vorhergehenden Ansprüche

**dadurch gekennzeichnet, dass**
der erste Ankerbereich (22) in Bezug auf das Ventilelement (12) beweglich ausgebildet ist und der zweite Ankerbereich (24) mit dem Ventilelement (12) verbunden vorliegt.

9.  Ventil (10) nach einem der vorhergehenden Ansprüche
**dadurch gekennzeichnet, dass**
die Ankerscheibe (20) auf einer Oberseite (34) des Ventilelements (12) angeordnet vorliegt, wobei die Oberseite (34) des Ventilelements (12) dem Elektromagneten (14) zugewandt ist.

10. Ventil (10) nach einem der vorhergehenden Ansprüche
**dadurch gekennzeichnet, dass**
mindestens einer der Ankerbereiche (22, 24) mindestens ein nach oben ragendes Element (16) aufweist.

11. Ventil (10) nach einem der vorhergehenden Ansprüche
**dadurch gekennzeichnet, dass**
die mindestens eine Öffnung (38), die mit dem Ventilelement (12) verschließbar ist, von einem Ventilsitz (36) gebildet wird.

12. Ventil (10) nach einem der vorhergehenden Ansprüche
**dadurch gekennzeichnet, dass**
der erste Ankerbereiche (22) ferromagnetisch ausgebildet ist oder ein ferromagnetisches Material umfasst, wobei der zweite Ankerbereiche (24) nicht ferromagnetisch ausgebildet ist und kein ferromagnetisches Material umfasst.

13. Verwendung des Ventils (10) nach einem der vorhergehenden Ansprüche zur Durchführung einer Filterabreinigung in einem Sauggerät.

14. Sauggerät zum Einsaugen von Staub und/oder Partikeln,
**dadurch gekennzeichnet, dass**
das Sauggerät ein Ventil (10) nach einem der vorgehenden Ansprüche aufweist.

15. Sauggerät nach Anspruch 14
**dadurch gekennzeichnet, dass**
das Sauggerät ein batteriebetriebenes Sauggeräts ist.

**Fig. 1**

**Fig. 2**

$\Delta$s2 = s2

**Fig. 3**

Fig. 4

**Fig. 5**

Fig. 6

Europäisches Patentamt

European Patent Office

Office européen des brevets

# EUROPÄISCHER RECHERCHENBERICHT

**Nummer der Anmeldung**

EP 22 20 7409

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 201470 A1 (CONTINENTAL TEVES AG & CO OHG [DE]) 2. August 2018 (2018-08-02) * Absätze [0008] – [0017], [0021] – [0027]; Abbildungen 1-6 * | 1-11 | INV. F16K31/06 A47L9/20 B01D46/42 |
| X | DE 10 2008 011573 A1 (DANFOSS AS [DK]) 15. Oktober 2009 (2009-10-15) * Absätze [0018] – [0020], [0033] – [0049]; Abbildungen 1, 2 * | 1,2,11, 12 | |
| X | EP 4 039 352 A1 (HILTI AG [LI]) 10. August 2022 (2022-08-10) * Absätze [0004] – [0044]; Abbildungen 1, 2 * | 1-15 | |

-----

-----

-----

**RECHERCHIERTE SACHGEBIETE (IPC)**

F16K
A47L
B01D

Der vorliegende Recherchenbericht wurde für alle Patentansprüche erstellt

| Recherchenort | Abschlußdatum der Recherche | Prüfer |
|---|---|---|
| Den Haag | 4. Mai 2023 | Rechenmacher, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 20 7409

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2023

| Im Recherchenbericht angeführtes Patentdokument | Datum der Veröffentlichung | Mitglied(er) der Patentfamilie | Datum der Veröffentlichung |
|---|---|---|---|
| DE 102017201470 A1 | 02-08-2018 | KEINE | |
| DE 102008011573 A1 | 15-10-2009 | CN 101960540 A | 26-01-2011 |
| | | DE 102008011573 A1 | 15-10-2009 |
| | | US 2010327202 A1 | 30-12-2010 |
| | | WO 2009106080 A1 | 03-09-2009 |
| EP 4039352 A1 | 10-08-2022 | KEINE | |

EPO FORM P0461

Für nähere Einzelheiten zu diesem Anhang : siehe Amtsblatt des Europäischen Patentamts, Nr.12/82